# EUROPEAN PATENT APPLICATION

(11) **EP 2 905 431 A1**
(43) Date of publication of application: **12.08.2015**
(21) Application number: 14461508.5
(22) Date of filing: 10.02.2014
(51) Int. Cl.: F01D 25/28, F01D 25/26, F02C 7/20, F01D 25/24, B25B 27/16

(54) **Method and system for non-invasive separation of components**

(71) Applicant: General Electric Company, Schenectady, New York 12345 (US)
(72) Inventor: Wojciechowski, Marek, 05-500 Piaseczno (PL); Zarmik, Maciej, 32-007 Wola Batorska (PL); Monfort-Moros, Philippe, 07700 Saint Just D'Ardèche (FR); Kowalczyk, Micha, 24-105 Baranów (PL)
(74) Representative: Patpol Kancelaria Patentowa Sp. z o.o.

(57) **Abstract**

A method and system (250) for use in facilitating relative movement between first and second components is provided. A first component engagement assembly (270) is inserted into an opening (252) in the first component. The first component engagement assembly is threadably coupled adjacent to a thrust member (260) such that the thrust member extends through the first component opening. An end (274) of the thrust member extends toward the second component. The first component engagement assembly (270) couples in frictional engagement with an inner surface (249) of the first component opening. When torque is exerted on the thrust member, the thrust member moves relative to the first component engagement assembly to exert, via the end of the thrust member, one of a thrust force and a traction force against the second component to move the second component relative to the first component.

## Description

### BACKGROUND

The present disclosure relates to the assembly and disassembly of components, and particularly to the separation or joining of heavy components, such as the halves of steam and gas turbine engine housings.

At least some known gas turbine engines include at least a compressor section, a combustor section, and a turbine section. At least some known steam turbine engines include at least one of a high pressure section, a medium pressure section, and a low pressure section. In at least some known gas and steam turbine engines, one or more of these sections typically includes a housing formed with upper and lower halves that join along a horizontally-extending interface. In at least some known housings for gas and steam turbine engines, the upper and lower halves may be massive, weighing several hundreds or even several thousands of pounds. For safety and stability, the lower halves of the housings may be secured to a floor or underlayment, for example via bolts. In the housings for at least some gas and steam turbine engines, the upper and lower halves include flanges that define the interface. Over time, due to the weight of the housing upper half, scaling, distortion, oxidation, and/or other phenomena, the flanges of the upper and lower halves may become adhered to one another, for example, via microwelding. In at least some known housings for gas and steam turbine engines, the respective halves of the housings may include vertically-extending portions that are in surface-to-surface contact with each other, and which likewise may become adhered to one another.

Periodically, it may be desirable or necessary to separate the halves of a gas or steam turbine engine housing, for example for repair, routine maintenance or installation of upgrades. The upper halves of at least some known gas and steam turbine engine housings are provided with lifting structures, such as eyebolts, to which a lifting device, such as a crane or winch, may be attached, to lift the housing upper half off of and away from the housing lower half. However, adhesion between juxtaposed surfaces along the interface between the halves, or along interfaces within the housing, may create a resistive force that must be overcome, that is far in excess of the force required to lift the weight of the upper half of the housing. Moreover, the resistive force may be far in excess of the capacity of the lifting structures provided on the housing upper half. Accordingly, in at least some known gas and steam turbine engine housings, additional lifting structures may be attached, on an ad hoc basis, to the upper housing half, to provide sufficient locations to which lifting devices can be coupled, to enable sufficient lifting force to be applied to the upper half. Such additional lifting structures may be attached to the housing upper halves by invasive techniques, including but not limited to welding and drilling.

### BRIEF DESCRIPTION

In an aspect, a method for use in facilitating relative movement between first and second components is provided. The method includes inserting a first component engagement assembly into an opening defined in the first component, wherein the first component engagement assembly is threadably coupled adjacent to a first end of a thrust member such that the thrust member extends through the first component opening and a second end of the thrust member extends toward the second component. The method also includes coupling the first component engagement assembly in frictional engagement with an inner surface of the first component opening. The method also includes exerting torque on the thrust member to cause the thrust member to move relative to the first component engagement assembly to exert, via the second end of the thrust member, one of a thrust force and a traction force against the second component to move the second component relative to the first component.

In another aspect, a system for facilitating relative movement between first and second components is provided. The system includes a thrust member. The system also includes a first component engagement assembly threadably coupled adjacent to a first end of the thrust member. The first component engagement assembly is configured for insertion into an opening defined in the first component such that the thrust member extends through the first component opening and a second end of the thrust member extends toward the second component. The first component engagement assembly is configured to facilitate frictional engagement with an inner surface of the first component opening. The thrust member is also configured to move relative to the first component engagement when torque is exerted on the thrust member. The thrust member is also configured to exert, via the second end of the thrust member, one of a thrust force and a traction force against the second component to move the second component relative to the first component.

In another aspect, a turbine system is provided. The turbine system includes at least a turbine section. The turbine system also includes a component engagement system for facilitating relative movement between first and second components in at least the turbine section. The component engagement system includes a thrust member. The component engagement system also includes a first component engagement assembly threadably coupled adjacent to a first end of the thrust member. The first component engagement assembly is configured for insertion into an opening defined in the first component such that the thrust member extends through the first component opening and a second end of the thrust member extends toward the second component. The first component engagement assembly is configured to facilitate frictional engagement with an inner surface of the first component opening. The thrust member is also configured to move relative to the first component engagement when torque is exerted on the thrust member. The thrust member is also configured to exert, via the second end of the thrust member, one of a thrust force and a traction force against the second component to move the second component relative to the first component.

### BRIEF DESCRIPTION OF THE DRAWINGS

FIG. 1 is schematic diagram of an exemplary gas turbine system.
Fig. 2 is a schematic diagram of an exemplary steam turbine system.
FIG. 3 is a sectional view of an exemplary flange interface for a housing for the gas turbine system shown in FIG. 1 or the steam turbine system shown in FIG. 2.
FIG. 4 is a perspective view of an exemplary component engagement system for use with the gas turbine system shown in FIG. 1 or the steam turbine system shown in FIG. 2.
FIG. 5 is an enlarged sectional view of the component engagement system shown in FIG. 4, shown prior to actuation of the component engagement system.
FIG. 6 is a sectional view of the component engagement system shown in FIG. 4, shown during actuation of the component engagement system.
FIG. 7 is sectional view of the component engagement system shown in FIG. 4 shown after separation of two housing flanges.
FIG. 8 is a perspective view of an alternative component engagement system.

### DETAILED DESCRIPTION

Although specific features of various embodiments of the disclosure may be shown in some drawings and not in others, this is for convenience only. In accordance with the principles of the disclosure, any feature of a drawing may be referenced and/or claimed in combination with any feature of any other drawing. As used herein, "through-bores" and "blind bores" may collectively be referred to as "openings." Also, as used herein, the term "couple" is not limited to a direct mechanical, thermal, communication, and/or an electrical connection between components, but may also include an indirect mechanical, thermal, communication and/or electrical connection between multiple components.

The present disclosure relates to methods and systems for separating components in machinery, such as, but not limited to housing halves for gas and steam turbine engines. Housing halves for heavy machinery such as the housings for gas and steam turbine engines used for power generation may be massive, weighing hundreds or thousands of pounds. Over time, such housing halves may become adhered to each other, through one or more of the mechanisms previously described herein. The present disclosure relates to methods and systems that will enable halves of housings, or any other pairs of joined components, that have become adhered to each other to be separated without resorting to invasive attachment of additional lifting structures or other separation structures. The methods and systems described herein also facilitate the separation of components in orientations other than those in which the components are joined along a horizontal interface. The methods and systems described herein may also facilitate the coupling of components.

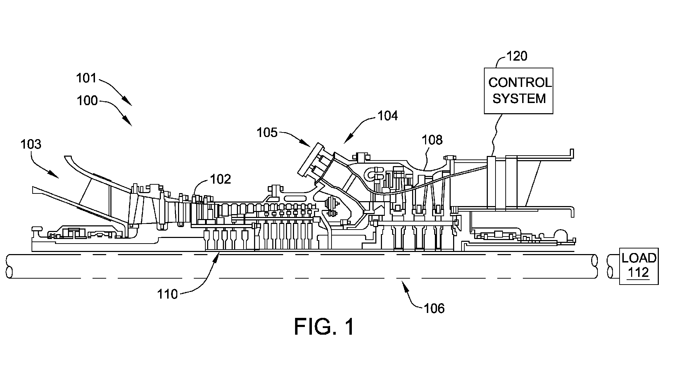

FIG. 1 is a schematic illustration of an exemplary gas turbine system 101 that includes a gas turbine engine 100 and a control system 120. Engine 100 includes a compressor section 102 and a combustor section 104. Engine 100 also includes a turbine section 108 and a common compressor/turbine rotor 110.

In operation, air 103 flows through compressor section 102, and after compression, is supplied to combustor section 104. Fuel 105 is channeled to a combustion region and/or zone (not shown) that is defined within combustor section 104 wherein the fuel is mixed with the air and ignited. Combustion gases generated are channeled to turbine section 108 wherein gas stream thermal energy is converted to mechanical rotational energy. Turbine section 108 is coupled to rotor 110, for rotation about an axis 106. In the exemplary embodiment, system 101 includes a load 112 that is coupled to rotor 110. Load 112 may be any device or system that uses rotational input from gas turbine engine 100, via rotor 110, to function. For example, load 112 may be, but is not limited to, an electrical generator.

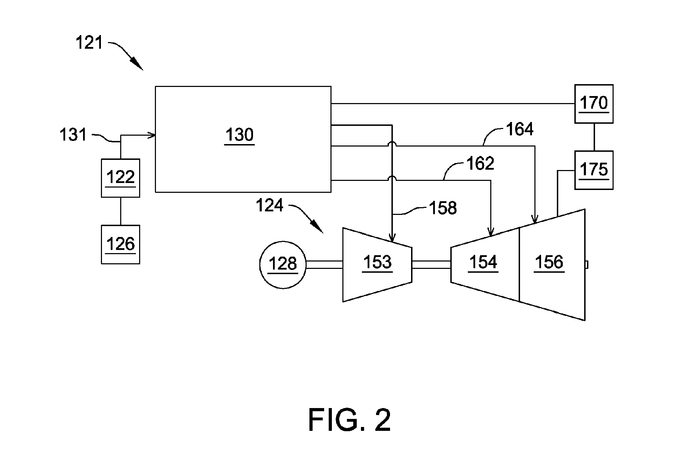

Fig. 2 is a schematic illustration of an exemplary simplified steam turbine system 121. In the exemplary embodiment, system 121 includes at least one heat source 122. More specifically, in the exemplary embodiment, heat source 122 may be a gas turbine engine. While gas turbine engine 122 is illustrated in the exemplary embodiment, it should be noted that system 121 may include any other type of heat source that enables system 121 to function as described herein. System 121 also includes at least one steam turbine engine 124.

In the exemplary embodiment, gas turbine engine 122 and steam turbine engine 124 may be each mechanically coupled to electric power generators 126 and 128, respectively. System 121 may also include at least a steam boiler 130 that is coupled in flow communication with gas turbine engine 122 via exhaust gas conduit 131. Steam turbine engine 124, in the exemplary embodiment, includes a high-pressure ("HP") section 153, an intermediate-pressure ("IP") section 154, and a low-pressure ("LP") section 156. In the exemplary embodiment, an HP steam conduit 158 extends from a HP steam section (not shown) in boiler 130 to HP section 153. Similarly, an IP steam conduit 162 extends from an IP steam section (not shown) in boiler 130 to IP section 154, and an LP steam conduit 164 extends from an LP steam section (not shown) in boiler 130 to LP section 156. In the exemplary embodiment, system 121 also includes a control system 170 coupled to boiler 130, and to a steam turbine or process control system 175 that is configured to detect operating parameters or conditions within each of HP section 153, IP section 154, and LP section 156 of steam turbine engine 124.

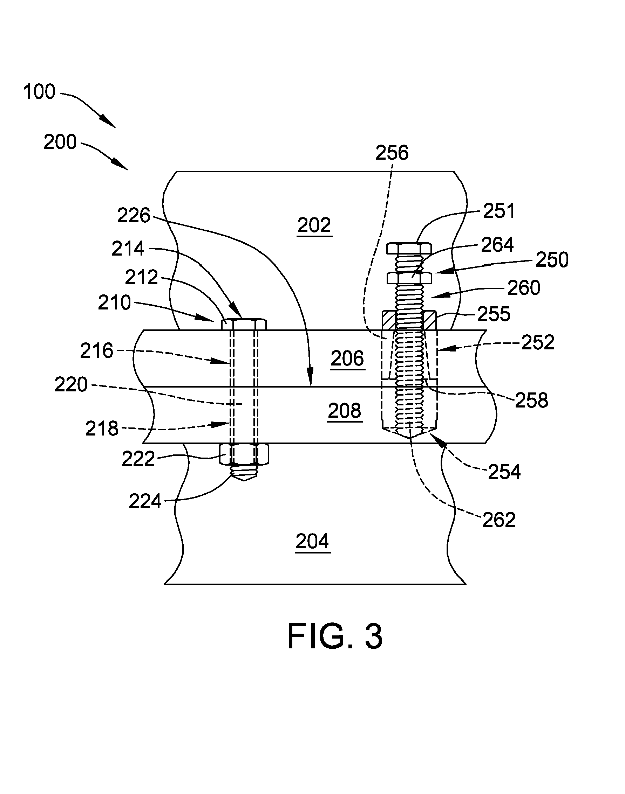

FIG. 3 illustrates an exemplary section 200 of gas turbine engine 100 shown in FIG. 1 or of steam turbine engine 124 shown in FIG. 2. Section 200 includes an interface 226 between a first component, for example, a housing upper half 202 and a second component, for example a housing lower half 204. In the exemplary embodiment, section 200 may be any of compressor section 102, combustor section 104, or turbine section 108 (all shown in FIG. 1), or any of high pressure section 153, intermediate pressure section 154, or low pressure section 156 (all shown in FIG. 2). Upper half 202 includes a flange 206 and lower half includes a flange 208. In the exemplary embodiment, flanges 206 and 208 are coupled together by a fastener assembly 210, extending through through-bores 216 and 218 defined in flanges 206 and 208, respectively. Fastener assembly 210 includes a bolt 212, including a head 214 and a threaded shaft 220. In the exemplary embodiment, a nut 222 is used to secure bolt 212. A tip 224 of shaft 220 may extend through nut 222. In the exemplary embodiment, any number of fastener assemblies 210 may be provided that enables housing halves 202 and 204 to be coupled together as described herein. In an alternative embodiment (not shown), fastener assembly 210 may have any configuration that enables housing halves 202 and 204 to be coupled together as described herein.

FIG. 3 also illustrates an exemplary component engagement system 250. As previously described, from time to time, it may be desirable to separate housing upper half 202 from housing lower half 204. After removal of fastener assemblies 210, adhesion forces may still be present as described hereinabove that may hinder separation of housing halves 202 and 204. In the exemplary embodiment, component engagement system 250 is configured for use in separating housing halves 202 and 204, along interface 226 between flanges 206 and 208. In addition, component engagement system 250 is configured for use in pre-existing openings defined in flanges 206 and 208, for example, a first opening in the form of a through-bore 252 defined in flange 206, and a second opening in the form of a blind bore 254 defined in flange 208.

Component engagement system 250 includes a thrust member 260. In the exemplary embodiment, thrust member 260 is in the form of a threaded bolt. In an alternative embodiment, thrust member 260 may have any configuration that enables component engagement system 250 to function as described herein. Component engagement system 250 also includes a nut 264, and a non-threaded collar 255 that is slidably coupled around bolt 260. Bolt 260 includes a head 251 and a threaded shaft 262. As described in further detail hereinbelow, bolt 260 facilitates the exertion of a thrusting force between halves 202 and 204, and more specifically, between flanges 206 and 208. In the exemplary embodiment, component engagement system 250 also includes a plurality of first jaws 256 and an internally-threaded first cone 258.

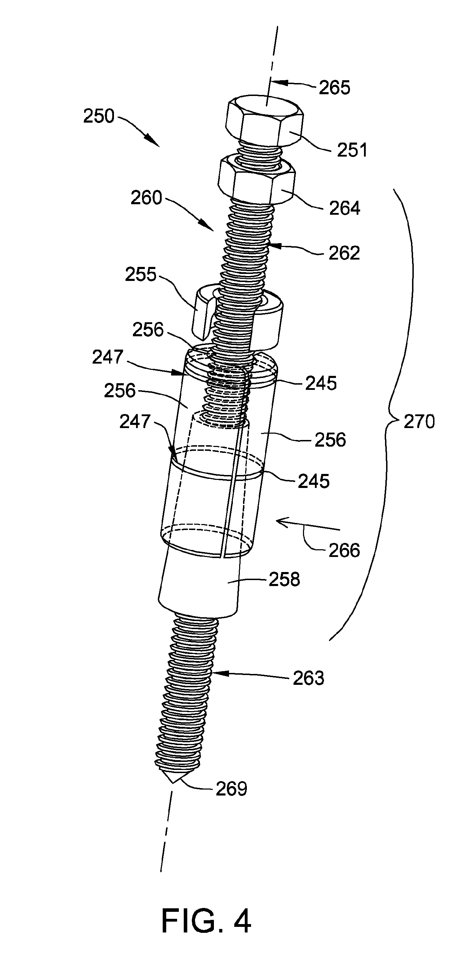

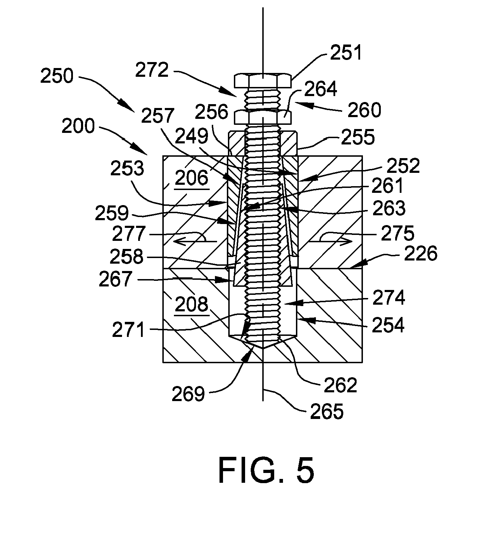

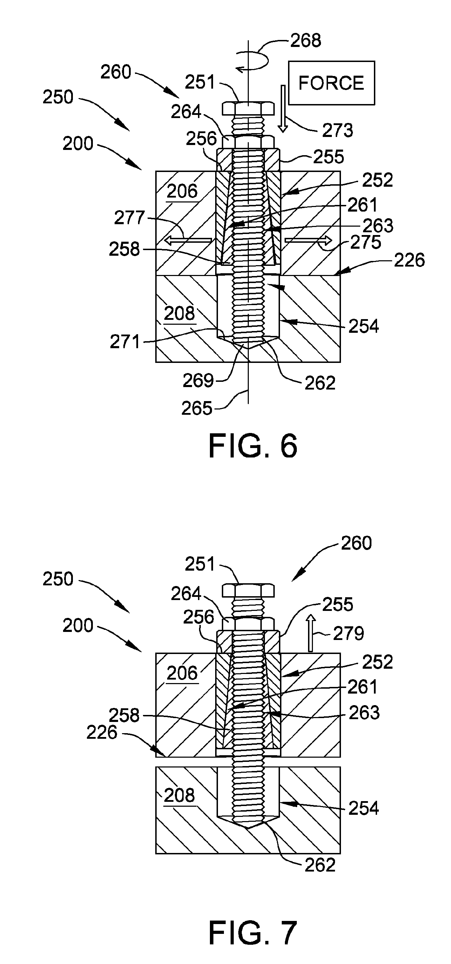

FIGS. 4-7 illustrate assembly and operation of component engagement system 250 in further detail. Specifically, FIG. 4 is a perspective view of component engagement system 250. FIG. 5 is an enlarged sectional view of component engagement system 250, shown prior to actuation. FIG. 6 is a sectional view of component engagement system 250, shown during actuation, and FIG. 7 is sectional view of component engagement system 250, shown after separation of flanges 206 and 208.

As shown in further detail in FIG. 4, in the exemplary embodiment, collar 255 is configured as a split or "C"-ring, and is not internally threaded, so that it is free to slide along bolt 260. Shaft 262 of bolt 260 includes threads 263, a longitudinal axis 265, a first end 272, a second end 274, and a tip 269. In the exemplary embodiment, each first jaw 256 has an arcuate cross-section (not shown) when viewed along a direction parallel to axis 265, and a generally triangular or wedge-shaped cross-section (not shown), when viewed in a direction indicated by arrow 266, perpendicular to axis 265. In addition, each first jaw 256 includes an outer surface 253 and an inner surface 257. Surfaces 253 and 257 may be configured using any suitable method including but not limited to machining, such that surfaces 253 and 257 appear on casual inspection to be substantially smooth. First jaws 256 are coupled together around shaft 262 by one or more spring rings 245 (shown in FIG. 4) oriented within a corresponding one or more grooves 247 defined in outer surfaces 253. First cone 258 likewise includes an outer surface 267 (shown in FIG. 4) that may be configured using any suitable method including but not limited to machining, such that surface 267 appears on casual inspection to be substantially smooth. Nut 264, collar 255, first jaws 256, spring rings 245, and first cone 258 collectively define a component engagement assembly 270 configured to engage a bore or opening defined in a component, for example through-bore 252 in housing upper half 202. In the exemplary embodiment, each of nut 264, collar 255, first jaws 256, spring rings 245, first cone 258, and bolt 260 may be fabricated from any suitable material that enables component engagement system 250 to function as described herein.

As previously described, component engagement system 250 is installed into section 200 by inserting component engagement system 250 into through-bore 252 of flange 206, and further into blind bore 254 of flange 208 (all shown in FIG. 6), until tip 269 is oriented near or against bore bottom surface 271. In the exemplary embodiment, friction between outer surfaces 253 and an inner surface 249 of through-bore 252 facilitates preventing undesired over-insertion of first jaws 256 into through-bore 252. Specifically, in the exemplary embodiment, first jaws 256 must remain above interface 226, to facilitate separation of flanges 206 and 208 by component engagement system 250 in order for component engagement system 250 to function as described herein. As illustrated in FIGS. 5-7, first cone 258 is provided with internal threads 263 that are configured to engage external threads 261 defined on shaft 262 of bolt 260.

Prior to actuation of components separation system 250, as described herein, a gap 259 (shown in FIG. 5) extends between each inner surface 257 of each first jaw 256, and outer surface 267 of first cone 258. After insertion of component engagement system 250, nut 264 is tightened on shaft 262 so that nut 264 moves along axis 265 until nut 264 is juxtaposed against collar 255, and collar 255 is axially bounded by nut 264 and first jaws 256. Tightening of nut 264 causes collar 255 to press first jaws 256 against drawing first cone 258, closing gap 259, and causing first cone 258 to push first jaws 256 laterally outwardly against inner surface 249 of through-bore 252, as indicated by arrows 275 and 277. In the exemplary embodiment, surfaces 253 and 249, and surfaces 257 and 267, are configured to facilitate the generation of frictional forces therebetween that are larger than frictional forces generated between threads 261 and 263.

As illustrated in FIG. 6, actuation of component engagement system 250 is initiated with the exertion of a downward force in the direction of arrow 273 on bolt 260. While the downward force is exerted, bolt 260 is rotated, for example by exerting torque on head 251 in the direction of arrow 268, around axis 265. Because the friction between first cone 258 and first jaws 256 is greater than the friction between shaft 262 and first cone 258, shaft 262 is able to rotate while first cone 258 remains stationary. Continued rotation of bolt 260 causes tip 269 to push against bore bottom surface 271. In reaction, threads 263 of shaft 262 push first cone 258 upwardly. However, as previously described, outer surface 267 is already in contact with inner surfaces 257 such that first cone 258 exerts lateral (e.g., radially outwardly directed) force against first jaws 256 in the direction of arrows 275 and 277 (also shown in FIG. 5). First cone 258 and first jaws 256 cooperate to grip inner surface 249 (shown in FIG. 5) of through-bore 252. Accordingly, a force created in reaction to tip 269 pushing against bore bottom surface 271 is transmitted through shaft 262, first cone 258, and first jaws 256 into flange 206, prompting flanges 206 and 208 to separate from each other.

Continued rotation of bolt 260 while force is exerted downwardly on bolt 260 eventually generates sufficient reaction force to overcome the adhesion forces maintaining flanges 206 and 208 in contact, and flanges 206 and 208 will separate, as shown in FIG. 7. After flanges 206 and 208 are separated, housing upper half 202 (shown in FIG. 3) may be lifted in the direction of arrow 279, via a lifting device coupled to existing lifting structures (not shown) provided on housing upper half 202. In the exemplary embodiment, any number of component engagement systems 250 may be provided that enables actuation of component engagement systems 250 to cause uniform controlled separation of flanges 206 and 208, for facilitating separation of halves 202 and 204.

In an alternative embodiment, instead of a circular cross-section, first cone 258 may be provided with a polygonal cross-section (not shown), to provide a plurality of substantially planar outer surfaces 267. In this alternative embodiment, inner surfaces 257 of first jaws 256 likewise may be substantially planar, to engage with planar outer surfaces 267. In another alternative embodiment, each of first cone 258 and first jaws 256 may have any suitable configuration that enables first cone 258 to function as a wedge member, such that when first jaws 256 and first cone 258 are brought together, as described hereinabove, first cone 258 exerts a lateral force on first jaws 256 that tends to force first jaws 256 apart and against inner surface 249 of through-bore 252.

As previously described, component engagement system 250 is configured for use with pre-existing openings provided in housing halves 202 and 204, specifically, through-bore 252 defined in flange 206 and blind bore 254 defined in flange 208. In an alternative embodiment, bores 252 and 254 may be specifically provided for use with component engagement system 250, and may be defined within flanges 206 and 208 before or after assembly of gas turbine engine 100 (shown in FIG. 1). In an alternative embodiment, component engagement system 250 may be used in a situation wherein through-bore 252 is defined in flange 206 and no blind bore is provided in flange 208, such that upon actuation of component engagement system 250, tip 269 of bolt 260 bears directly against flange 208 at interface 226.

In the exemplary embodiment, a plurality of component engagement systems 250 are deployed along interface 226 (shown in FIG. 3) and are actuated substantially in unison, to ensure that forces applied to flanges 206 and 208 are evenly distributed and uniformly applied, towards preventing undesired deformation or damage to either of flanges 206 and 208. In this manner, component engagement system 250 facilitates separation of housing halves that are adhered together, eliminating the need to attach coupling and lifting structures to either of the housing halves. In addition, the use of screw-operated component engagement system 250 facilitates the application of separation forces to adhered-together housing portions in a controlled, incremental manner via the use of threaded bolt 260 and first cone 258.

In the exemplary embodiment, a penetrant and/or lubricant material may be applied to interface 226 to facilitate separation of flanges 206 and 208, provided that care is taken to ensure that no such material enters bores 252 and 254 to compromise the frictional engagement between first jaws 256 and inner surface 249. In an alternative embodiment, separation of flanges 206 and 208 is performed without the use of a penetrant and/or lubricant material.

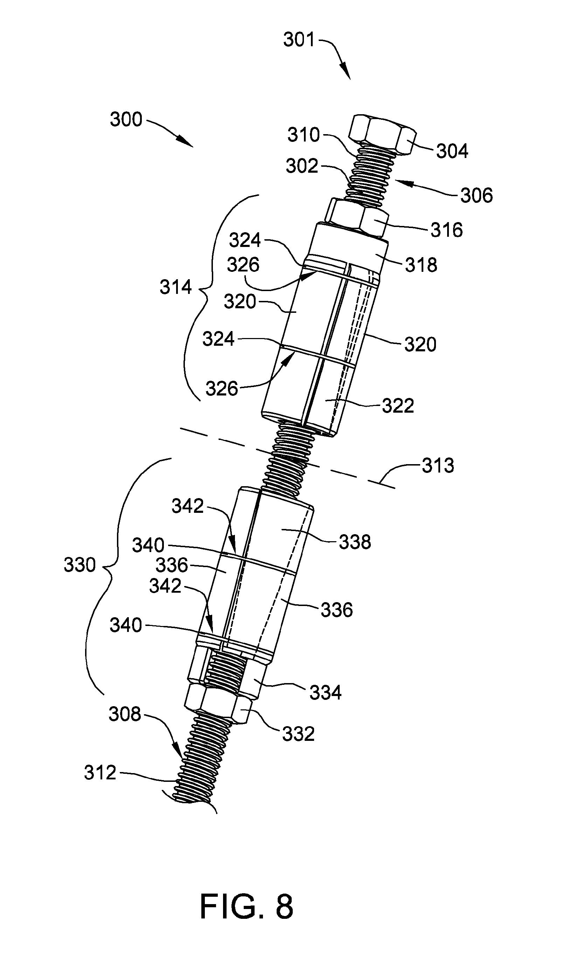

FIG. 8 is a perspective view of alternative component engagement system 300. In at least some gas turbine engines 100 or steam turbine engines 124, aligned non-threaded openings (not shown) may be provided in both of flanges 206 and 208, wherein the non-threaded openings are in the form of through-bores that extend completely through both of flanges 206 and 208. This is in contrast to bores 252 and 254 (shown in FIG. 3) wherein blind bore 254 is an opening having a bore bottom surface 271. In such known gas turbines or steam turbines having housing flanges with two aligned through-bores, there is no bore bottom surface 271 for a shaft 262 to push against.

Accordingly, component engagement system 300 is configured for insertion into a first through-bore (not shown) defined in a first flange of a housing upper half and further into a second through-bore (not shown) defined in a flange of an adjacent housing lower half, wherein the first and second through-bores are substantially coaxially oriented with respect to each other. Component engagement system 300 includes a thrust member 301. In the exemplary embodiment, thrust member 301 is in the form of a double-threaded bolt. In an alternative embodiment, thrust member 301 may have any suitable configuration that enables component engagement system 300 to function as described herein. Component engagement system 300 also includes a first component engagement assembly 314 and a second component engagement assembly 330. Bolt 301 includes a shaft 302, a head 304, a first end 306 and a second end 308. In the exemplary embodiment, first end 306 includes threads 310 having a first pitch and a first direction sense (for example, right-handed), while second end 308 includes threads 312 having a second pitch which may be the same as the first pitch, and a second direction sense opposite to the first direction sense (that is, left-handed). Threads 310 transition into threads 312 at about midway along shaft 302, as indicated by a line 313.

In an alternative embodiment, threads 310 and 312 may have any pitch and/or sense of direction that enables component engagement system 300 to function as described herein. In addition, bolt 301 may be fabricated from any suitable material and/or have any suitable configuration that enables component engagement system 300 to function as described herein. For example, shaft 302 and head 304 may be initially fabricated as separate elements, to enable first component engagement assembly to be coupled onto shaft 302, and then head 304 may be secured to shaft 302 using any suitable method, including but not limited to welding, that enables torque applied to head 304 to be transmitted to shaft 302.

In the exemplary embodiment, first component engagement assembly 314 includes a nut 316, a collar 318, first jaws 320, and a first cone 322 that is internally-threaded (not shown) to threadably engage threads 310 of shaft first end 306. First jaws 320 are coupled around shaft 302 by one or more spring rings 324 oriented in grooves 326 defined in first jaws 320. In the exemplary embodiment, nut 316, collar 318, first jaws 320, first cone 322, and spring rings 324 may have the same configurations and functions as nut 264, collar 255, first jaws 256, first cone 258, and spring rings 245, respectively, that are described hereinabove and shown in FIGS. 3-7. Specifically, tightening of nut 316 moves nut 316 axially away from head 304 and toward collar 318 and first jaws 320. Collar 318, in turn, presses first jaws 320 against first cone 322. In the exemplary embodiment, each of nut 316, collar 318, first jaws 320, first cone 322, and spring rings 324 may be fabricated from any suitable material that enables component engagement system 300 to function as described herein.

In the exemplary embodiment, second component engagement assembly 330 includes a nut 332, a collar 334, second jaws 336, and a second cone 338 that is internally-threaded (not shown) to threadably engage threads 312 of shaft second end 308. Second jaws 336 are coupled around shaft 302 by one or more spring rings 340 oriented in grooves 342 defined in second jaws 336. In the exemplary embodiment, nut 332, collar 334, second jaws 336, second cone 338, and spring rings 340 may have the same configurations and functions as nut 264, collar 255, first jaws 256, first cone 258, and spring rings 245, respectively, that are described hereinabove and shown in FIGS. 3-7, except that because of the direction of threads 312, nut 332 is rotated in an opposite direction (as compared to nut 316) relative to threads 312, to force second jaws 336 into contact with second cone 338. In the exemplary embodiment, each of nut 332, collar 334, second jaws 336, second cone 338, and spring rings 340 may be fabricated from any suitable material that enables component engagement system 300 to function as described herein.

Use of component engagement system 300 to separate two housing halves, such as halves 202 and 204 (shown in FIG. 3), is initiated by insertion of component engagement system 300 into two aligned through-bores (not shown). Nuts 316 and 332 may be partially tightened against respective jaws 320, 336, before insertion of component engagement system 300 into the through-bores. Nuts 316 and 332 are then further tightened to cause jaws 320, 336 to push against cones 322, 338 and spread, gripping inner surfaces of the respective through-bores. After first and second component engagement assemblies 314 and 330, have been secured as described, bolt 301 is rotated. As was previously described with respect to component engagement system 250 (shown in FIG. 4), shaft 302, first jaws 320, and first cone 322, and second jaws 336 and second cone 338 are configured such that friction forces between first jaws 320 and first cone 322 are greater than friction forces between shaft 302 and cone 320, and friction forces between second jaws 336 and second cone 338 are greater than friction forces between shaft 302 and second cone 338. Accordingly, rotation of bolt 301 causes shaft 302 to rotate relative to both of cones 322 and 338. Rotation of bolt 301 causes head 304 to move toward first component engagement assembly 314. Simultaneously, rotation of bolt 301 causes second component engagement assembly 330 to move away from head 304 and first component engagement assembly 314, because of the different directions of threads 310 and 312.

During continued rotation of bolt 301, component engagement assemblies 314 and 330 force the flanges coupled to them (not shown) to be separated, as previously described with respect to component engagement system 250 described hereinabove. In the exemplary embodiment, any number of component engagement systems 300 may be installed in a housing (not shown) that enables component engagement systems 300 to function as described herein. Similar to component engagement system 250, component engagement system 300 facilitates separation of housing halves that are adhered together, eliminating the need to attach additional coupling and lifting structures to either of the housing halves. In addition, the use of component engagement system 300 facilitates the application of separation forces to adhered-together housing portions in a controlled, incremental manner via the use of threaded bolt 301 and cones 322 and 338.

Component engagement system 300 may also be used, in a reverse procedure to that described hereinabove, to close a gap between flanges 206 and 208 (shown in FIG. 3), when housing halves 202 and 204 (also shown in FIG. 3) are being coupled together. In at least some known gas turbine engines 100 (shown in FIG. 1) or steam turbine engines 124 (shown in FIG. 2), there may exist internal structures that fit in close proximity to one another, and which may begin to exert substantial resistive frictional forces as housing halves 202 and 204 are brought together, for example during initial assembly or subsequent re-assembly procedures. Accordingly, in such circumstances, by suitably positioning first component engagement assembly 314 and second component engagement assembly 330 sufficiently far apart along bolt 301, and reversing their orientations on bolt 301 relative to their orientations shown in FIG. 7, assembly 314 may be positioned within through-bore 252 (shown in FIG. 5) and assembly 330 may be positioned within through-bore 254 (FIG. 5) and coupled to flanges 206 and 208, respectively, while flanges 206 and 208 are still separated. After assembly 314 has been coupled to flange 206 and assembly 330 has been coupled to flange 208, application of torque to bolt 301 causes assemblies 314 and 330 to exert traction forces on flanges 206 and 208, drawing flanges 206 and 208 toward each other.

The methods and systems described herein address at least some of the disadvantages of, and provide advantages over, known component separation methods and systems. For example, the methods and systems described herein facilitate separation of adhered-together housing components without the need for intrusive coupling of purpose-built attachment and lifting devices to existing housings. In addition, the methods and systems described herein enable the application of separation forces to adhered-together housing components in a controlled, incremental manner. The methods and systems described herein enable the separation of adhered-together components that are horizontally coupled, vertically coupled, or in any other orientation. The methods and systems described herein also facilitate closure of a gap between two components that are being assembled.

Exemplary embodiments of systems and methods for separating components are described above in detail. The systems and methods are not limited to the specific embodiments described herein, but rather, actions of the methods and/or components of the systems may be utilized independently and separately from other components and/or actions described herein. For example, the systems and methods described herein are not limited to practice only with gas turbine engine systems, but also may be used in combination with any other devices that include housing halves or other components that may need to be separated or disassembled, for which assistance in exerting separating force would be useful.

It will be appreciated that the above embodiments that have been described in particular detail are merely example or possible embodiments, and that there are many other combinations, additions, or alternatives that may be included.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the claimed subject matter, including the best mode, and also to enable any person skilled in the art to practice the claimed subject matter, including making and using any devices or systems and performing any incorporated methods. The patentable scope of the subject matter described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

While the disclosure has been described in terms of various specific embodiments, those skilled in the art will recognize that the disclosure may be practiced with modifications within the spirit and scope of the claims.

## Claims

1. A system (250) for use in facilitating relative movement between first and second components (202, 204), wherein said system comprises:
a thrust member (260); and
a first component engagement assembly (270) threadably coupled adjacent to a first end (272) of said thrust member,
wherein said first component engagement assembly is configured for insertion into an opening (252) defined in the first component such that said thrust member extends through the first component opening and a second end (274) of said thrust member extends toward the second component,
wherein said first component engagement assembly is configured to facilitate frictional engagement with an inner surface (249) of the first component opening; and
wherein said thrust member is configured to move relative to said first component engagement assembly when torque is exerted on said thrust member, and wherein said thrust member is configured to exert, via said second end of said thrust member, one of a thrust force and a traction force against the second component to move the second component relative to the first component.

2. The system (250) in accordance with Claim 1, wherein said first component engagement assembly comprises:
a first cone (258) threadably coupled adjacent to said first end of said thrust member; and
at least one first jaw (256) coupled to said thrust member adjacent to said first cone, wherein said first cone is configured to press against said at least one first jaw to cause said at least one first jaw to frictionally engage the inner surface of the first component opening.

3. The system (250) in accordance with Claim 2, wherein said first component engagement system comprises a nut (264) threadably coupled to said thrust member such that said at least one jaw is oriented axially between said nut and said first cone, wherein rotation of said nut on said shaft prompts said at least one first jaw into contact with said first cone.

4. The system (250) in accordance with Claim 3, wherein said first component engagement assembly comprises a collar (255) slidably coupled to said thrust member, wherein said collar is axially oriented on said thrust member between said nut and said at least one first jaw.

5. The system (250) in accordance with Claim 2, wherein said first component engagement assembly comprises:
at least two jaws (256); and
at least one spring ring (245) coupled to said at least two jaws, wherein a portion of said at least one spring ring is oriented within a groove (247) defined in an outer surface (253) of each of said at least two jaws.

6. The system (250) in accordance with Claim 1, wherein said thrust member comprises:
a threaded shaft (262); and
a head (251) coupled to said shaft and configured to facilitate transmission to said shaft of torque applied to said head.

7. The system (300) in accordance with Claim 1, wherein said second end (308) of said thrust member (301) is configured to be inserted into an opening defined in the second component, wherein the second component opening is substantially aligned with the first component opening.

8. The system (300) in accordance with Claim 7, wherein said system comprises a second component engagement assembly (330) coupled adjacent to said second end of said thrust member.

9. The system (300) in accordance with Claim 8, wherein said second component engagement assembly (330) is configured to be coupled in frictional engagement with an inner surface of the second component opening.

10. The system in accordance with Claim 9, wherein said second component engagement assembly (330) comprises:
a second cone (338) threadably coupled adjacent to said second end of said thrust member; and
at least one second jaw (336) coupled to said thrust member adjacent to said second cone, wherein said second cone is configured to press against said at least one second jaw to cause said at least one second jaw to frictionally engage the inner surface of said second component opening.

11. A turbine system (101), said turbine system comprising:
at least a turbine section (108); and
a component engagement system (250) for use in facilitating relative movement between first and second components (202, 204) in at least said turbine section, wherein said component engagement system comprises:
a thrust member (260); and
a first component engagement assembly (270) threadably coupled adjacent to a first end (272) of said thrust member,
wherein said first component engagement assembly is configured for insertion into an opening (252) defined in the first component such that said thrust member extends through the first component opening and a second end (274) of said thrust member extends toward the second component,
wherein said first component engagement assembly is configured to facilitate frictional engagement with an inner surface (249) of the first component opening, and
wherein said thrust member is configured to move relative to said first component engagement assembly when torque is exerted on said thrust member, and wherein said thrust member is configured to exert, via said second end of said thrust member, one of a thrust force and a traction force against the second component to move the second component relative to the first component.
